Europäisches Patentamt

**(19)** European Patent Office

Office européen des brevets

**(11)** Publication number : **0 305 498 B1**

# EUROPEAN PATENT SPECIFICATION

**(45)** Date of publication of patent specification :
08.04.92 Bulletin 92/15

**(51)** Int. Cl.⁵ : **G11B 21/10,** G11B 19/20,
G11B 5/55, G11B 5/40

**(21)** Application number : **88903491.4**

**(22)** Date of filing : **26.02.88**

**(86)** International application number :
**PCT/US88/00531**

**(87)** International publication number :
**WO 88/06789 07.09.88 Gazette 88/20**

**(54) CRASH-PREVENTION FOR DISK DRIVE POSITIONING SYSTEM.**

**(30)** Priority : **03.03.87 US 21380**

**(43)** Date of publication of application :
**08.03.89 Bulletin 89/10**

**(45)** Publication of the grant of the patent :
**08.04.92 Bulletin 92/15**

**(84)** Designated Contracting States :
**BE CH DE FR GB IT LI LU NL SE**

**(56)** References cited :
**EP-A- 0 131 469**
**FR-A- 2 105 945**
**GB-A- 2 078 030**

**(73)** Proprietor : **Unisys Corporation**
**P.O. Box 500**
**Blue Bell Pennsylvania 19424 (US)**

**(72)** Inventor : **REVELS, William, R.**
**3279 Fronda Drive**
**San Jose, CA 95148 (US)**
Inventor : **ROSE, Andrew, M.**
**2501 Mardell Way**
**Mountain View, CA 94043 (US)**

**(74)** Representative : **Eisenführ, Speiser & Strasse**
**Martinistrasse 24**
**W-2800 Bremen 1 (DE)**

## Description

The present disclosure relates to a positioning servo mechanism and more particularly one operating to control a carriage advanced across the high density recording disk.

## BACKGROUND, FEATURES

Workers in the art of making and using servo mechanisms for positioning transducer-carriages, such as those used in a high density magnetic disk drive, are aware of positioning problems and particularly the damage that may occur in case of carriage actuator "run-away" (translation at unduly high speed). At "run-away speed," the carriage is very liable to suffer a damaging collision with end stops and is apt to damage the servo mechanism or the carriage, etc. Workers are familiar with means for preventing or minimizing "run-away," for instance, by anticipating a related fault condition developing in the controller or servo mechanism. This invention addresses the problem of unsafe actuator speed.

As workers know, the recording transducers carried on such carriages are generally quite fragile and are mounted on flimsy flexures. And, the current trend toward higher density storage on disks has obsolesced the use of relatively slow stepping motor positioners in favor of faster magnetic linear or rotary actuators; e.g., inductive types operating at a speed proportional to current to position heads under the control of positional feedback information and externally supplied demand and control signals. The high cost of present-day heads make "run-away acceleration" and crashes too costly to contemplate, especially in light of the relatively simple precautionary avoidance techniques that can be taken. This system addresses these problems.

In general, a problem with some other approaches to solving this problem is that they involve a too-sudden deceleration of the actuator. This can induce violent vibration which can in turn cause the flying heads to momentarily dip and crash against the disk surface, damaging themselves and the disk. This can lead to a catastrophic failure where the heads do not recover their flying ability and/or where data stored on the disk is lost.

One particular approach to solving this problem is described in European patent application EP-A-0131469 to Berti (see USSN 512,873 filed Juli 12, 1983, now US 4553181). Here, a specially chosen RC network is interposed between the head position control servo and the head actuator so as to automatically limit maximum head velocity preferably to a value which will prevent damaging head crashes, even when a fault occurs in the system. Berti does use passive circuit means with just few reliable components; however, component limitations can degrade actuator performance and increase access time; also the system fails to report system faults, which induce "runaway."

Also, Berti unfortunately requires a rather expensive, albeit reliable, RC network and also requires a higher servo output voltage to maintain prescribed brief track-to-track access times. Further, the Berti approach does not absolutely prevent head crashes; it only limits head velocity during impact (vs endstop). Of course, a head crash at any velocity is undesirable; even a few "minor" head crashes can eventually cause serious damage, as workers well know.

Yet another approach provides an external transducer and associated crash prevention means. In this approach (using closed loop detection of speed), detection sensitivity will vary across the linear actuator stroke, based on expected speeds. Faults are "reported" in a limited sense. This system can't prevent impact (unless an additional "stopping-circuit" is added); and the required external transducer increases the number of components and gives alignment problems, as well as degrading reliability. Also it essentially involves only speed detection; so it must be combined with actuator deactivation and carriage-stopping means to fully meet the crash problem.

Yet another approach is given in UK Patent application GB-A-2078030 to Greig (published 23 Dec 1981) involving the provision of saturation detector monitoring the output level of an inhibitable power amplifier, while providing an indication to a timer of amplifier saturation. Detection of saturation inhibits input to the amplifier if saturation persists longer than a predetermined period. This system has the virtue of reporting (some) fault conditions; also it will detect an "open coil" condition (and could prevent impact if a "stopping circuit" were added).

However, Greig falls short in using an "open loop" servo wherein, if the failure mode doesn't involve 100% saturation, the timers are reset and restarted -- hence actuator speed can still accumulate dangerously. And this system is ineffective where the actuator amplifier it itself faulty. Also, while it detects and disables, it does not stop the carriage.

--Invention features:

As particularized below, the present system provides a "dynamic brake" which can entirely prevent actuator impact, while automatically removing the brake when speed is sufficiently reduced (permitting external bias circuit to move the carriage to non-data zones). Also, it involves closed-loop detection and will detect an "open coil" condition. A preferred embodiment comprises a velocity detector, a fault detector and associated latch, means for disabling the power amplifier to the actuator coil, plus means for absolutely stopping the actuator -- an unusual advantageous combination of features.

In one of its forms the subject system involves detecting "actual" actuator velocity (e.g., as function of back emf from actuator voice coil), monitoring this to see when it exceeds a prescribed maximum ($V_{AC} > V_{max}$), shutting-down the current source entirely, before the actuator hits an endstop, by shorting-out current to the actuator. In combination with this, one may also shutdown or derate, input to the actuator power supply; e.g., to decelerate actuator, and possibly avoid shutdown. Preferably, a delay is also used to ignore "transients" and to allow the power-derating to bring velocity back to a safe level without shutting-down. The present application provides a disk drive servo system as defined in claim 1 and a method of providing servo control as defined in claim 7.

BRIEF DESCRIPTION OF THE DRAWINGS

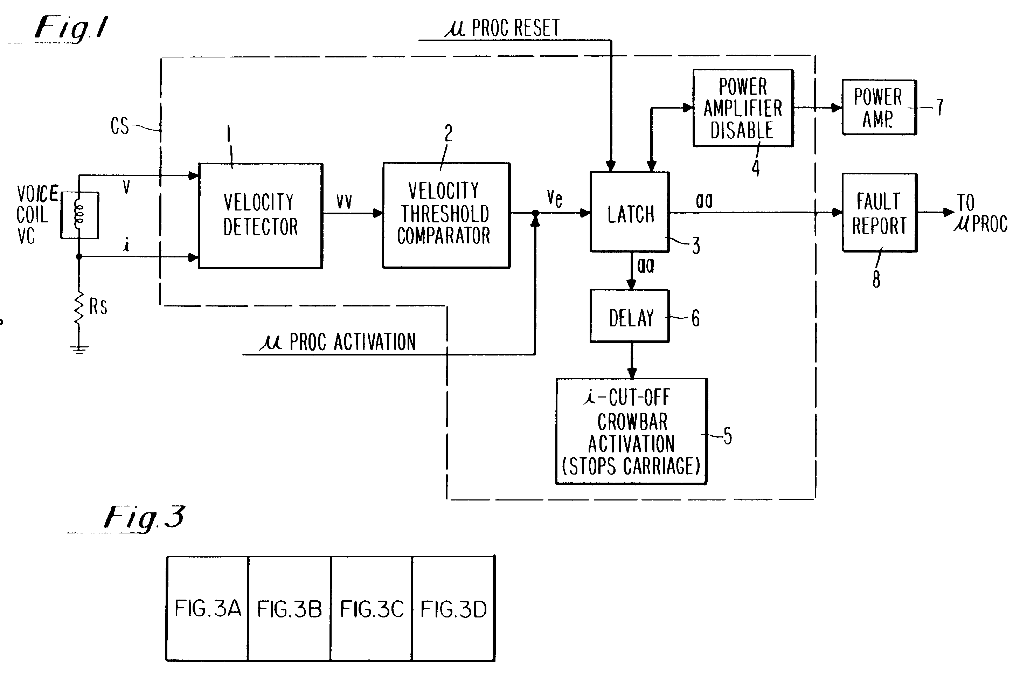

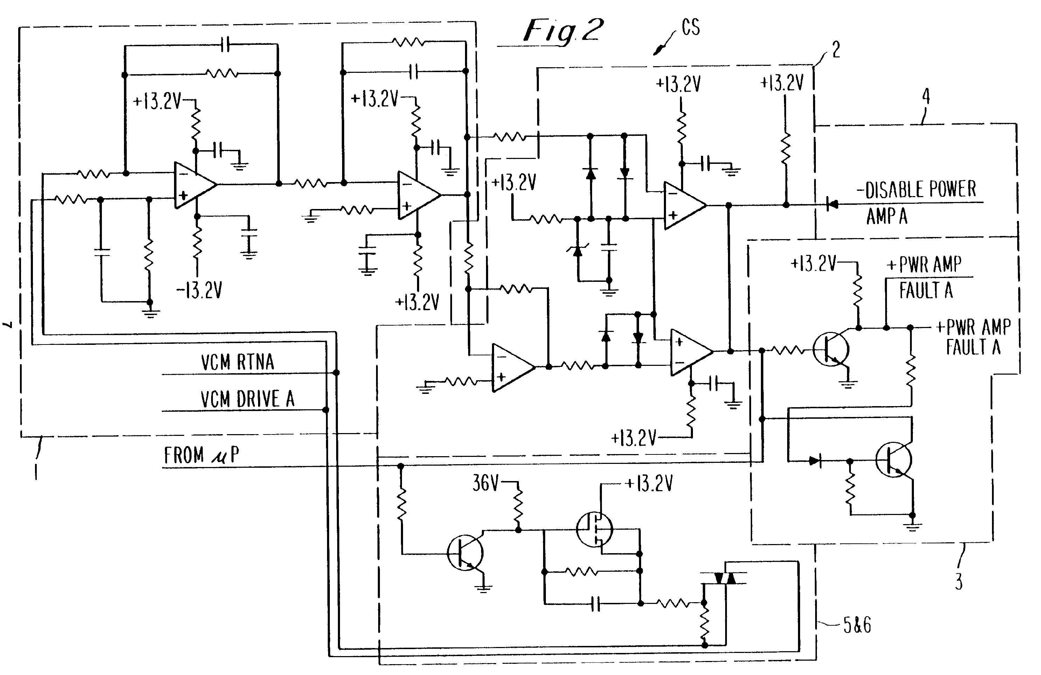

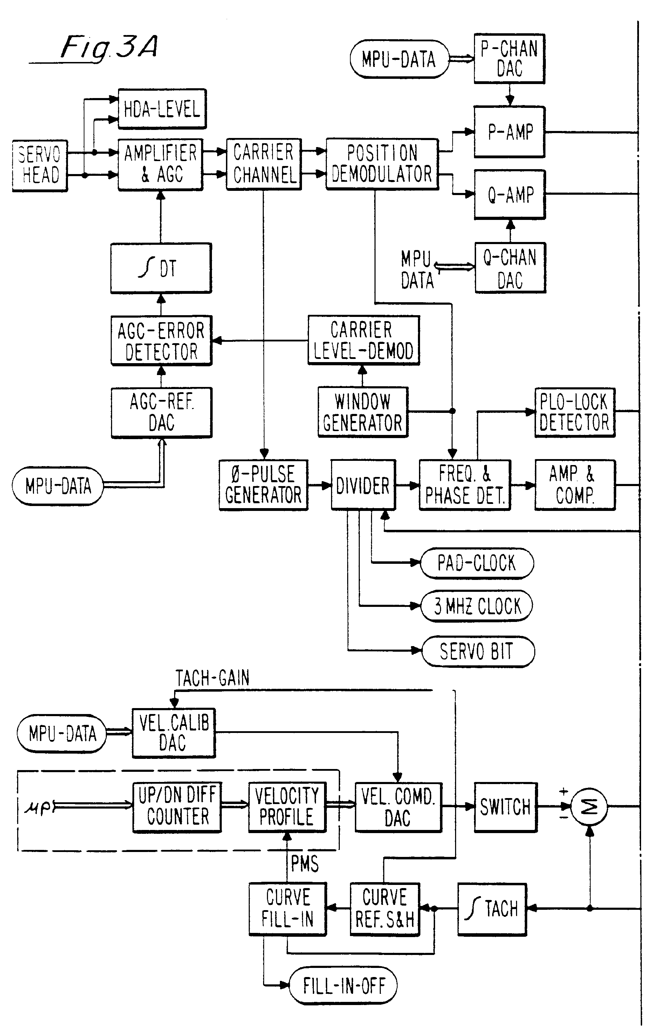

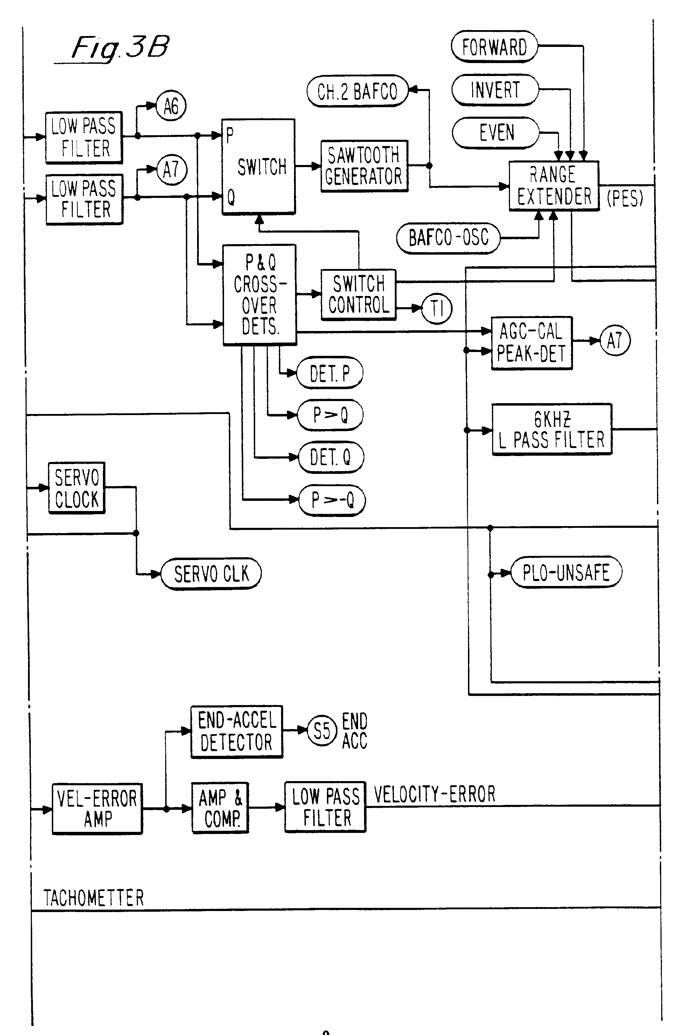

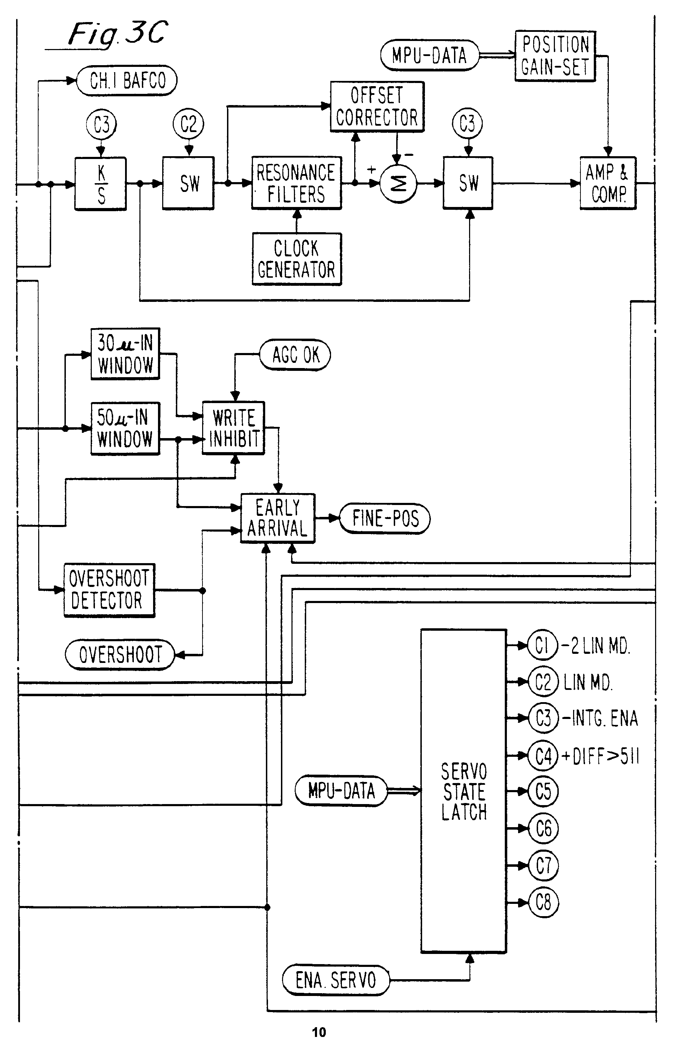

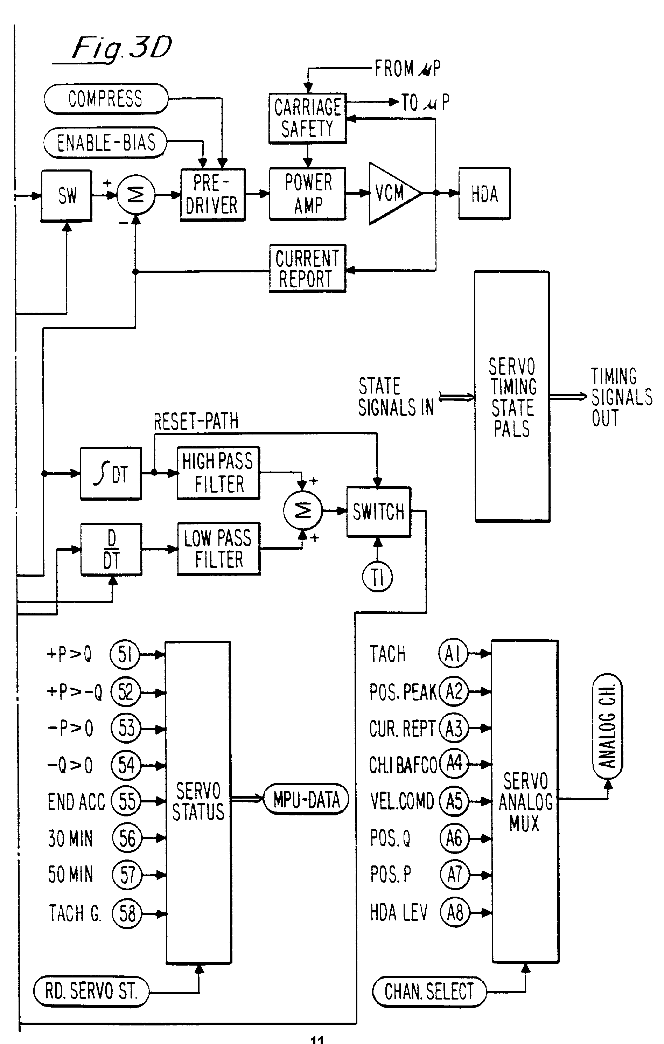

FIG. 1 is a block diagram of a preferred velocity safety circuit embodiment, with FIG. 2 showing the elements thereof in preferred circuit implementation; while FIG. 3 is a block diagram of an overall disk drive servo system apt for using the subject embodiment.

DESCRIPTION OF PREFERRED EMBODIMENT

FIG. 1 schematically illustrates a velocity safety arrangement, constructed according to principles of this system (implemented in the circuit of FIG. 2). This and other means discussed herein will generally be understood as constructed and operating as presently known in the art except where otherwise specified and, except as otherwise specified, all materials, methods, devices and apparatus herein will be understood as implemented by known expedients according to present good practice.

The arrangement in FIG. 1 principally comprises a control system CS including: a Velocity Detector unit 1 receiving input from an actuator coil (e.g., for disk drive servo, as known in the art); a Velocity Threshold Comparator stage 2 receiving signals from unit 1; Latch means 3 receiving input from stage 2 (as well as a controlling microprocessor); a Power Amplifier Disable stage 4 and Delay means 6, both receiving signals (aa) from Latch 3 and a "crowbar Activation" stage 5 controlled via Delay 6. Velocity Detector unit is adapted to receive values of voice-coil back-emf (from voice coil motor VC driving the linear actuator for a disk drive, as known in the art) and, responsively apply "velocity" signals vv to Velocity Threshold Comparator stage 2. Comparator 2 is particularly adapted to compare signals vv with a preset $V_{max}$, and when vv > $V_{max}$ issue a signal $v_e$. Arrival of signal $v_e$ at Latch circuit 3 will indicate that present actuator velicity $v_{act}$ exceeds $v_{MAX}$. Latch 3 is adapted to be activated in response to this input, along with prescribed microprocessor activation signals ma as indicated and to reponsively emit "fault-indicating" signals aa, applying these to Power Amplifier Disable stage 4; to a fault Reporting means 8 (preferably part of the controlling microprocessor) and also to a Crowbar (power cut-off) stage 5 via a prescribed delay circuit 6.

Disable stage 4 will be understood as adapted to responsively disable a prescribed power amplifier driving the actuator. Crowbar stage 5 is adapted to responsively cut-off all power to the actuator and force the carriage to an immediate stop (preferably, including a triac or the like adapted to virtually short the current across coil VC -- workers will recognize that a "triac" is an active solid state arrangement that operates like back-to-back low-impedance diodes, impressing a very low impedance, bi-directionally, across a device like the v-coil). The Fault Reporting means 8 will be used as known in the art; for instance, as present means for reporting a major fault that may require operator intervention, and to set a flag, activate a warning signal, etc.

One might summarize the operation as follows:

If the actual actuator velocity as detected at Detector 1 exceeds the prescribed maximum, $V_{max}$, this will initiate an output from Comparator 2 to set Latch 3 (assumed enabled by the microprocessor input as well) so Latch 3 will emit fault signals (aa). Signals aa applied to Power Amplifier Disable stage 4 will disable (or derate) the actuators power amplifier 7 (which energizes voice coil VC). Fault signals aa are also applied to a Delay 6 which will delay application thereof to Crowbar unit 5 for a prescribed time, sufficient to determine if the "excess-velocity condition" persists, and especially to determine whether the "disable" stage 4 has been able to correct the problem by reducing actual velocity below $V_{max}$.

Such may not be the case, particularly when amplifier 7 (or associated circuitry) is the culprit, and responsible for run-away velocity -- in which case, after the prescribed delay introduced by unit 6, input is provided to activate Crowbar unit 5 to, essentially, short-out all current to coil VC and immediately bring the actuator to a halt.

Note that detector 1 detects unsafe velocity by sensing back-emf from coil VC, thus also detecting whether VC is "open" ( -- if VC is "open," its voltage will rise quickly and its current go to zero, so this condition may be interpreted as "fault" -- e.g., an open connection or the like). Back-emf times a constant will yield actual velocity. Conveniently, back-emf can be determined as full coil voltage less the IR drop there across as indicated in FIG. 1.

After derating of amplifier 7 and/or activation of Crowbar unit 5, the microprocessor will issue a signal resetting Latch 3 as indicated in FIG. 1.

Workers will note that Power Amplifier Disable can provide a "dynamic brake" which can prevent actuator impact with the brake automatically removed when, and if, speed is sufficiently reduced (e.g., permitting external bias circuit to move the carriage to a non-data zone). It involves "closed-loop" feedback.

The system also involves a crowbar unit which stops the carriage in its tracks if all else fails -- something unique in the art -- taking care of Amplifier faults and open-coil situations -- also something special in such arrangements. Workers will appreciate that this system may be implemented with a few simple passive, inexpensive, high reliability components (e.g., see circuit in FIG. 2) which do not degrade performance or increase access time.

The means and methods disclosed herein are also applicable to other high density disk files, as well as to related systems. Also, the present invention is applicable for enhancing other servo systems.

## Claims

1. A disk drive servo system for controllably translating servo arm means across disk tracks using actuator means including drive coil means (VC), this system including a safety arrangement adapted to reduce actuator velocity below a prescribed maximum velocity ($V_{max}$), this arrangement including means (1) for detecting actual actuator velocity ($V_{act}$) at any given moment during operation and providing velocity signal (VV); means (2) for comparing said velocity signal (VV) with said prescribed maximum velocity ($V_{max}$) and responsively providing an alarm output signal ($V_e$) when VV > $V_{max}$, and means (3) provided at the output of compare means (2), being adapted, responsive to receipt of alarm output signal ($V_e$), to cause a virtually shorting-out current to coil means (VC) after a prescribed delay.

2. The disk drive sevo system of claim 1 wherein the arrangement also reduces power input to coil means (VC), responsive to appearance of alarme output signal ($V_e$) to decelerate the actuator means.

3. The disk drive servo system of claim 2 wherein power amplifier means (7) is included in the system for providing a controlled driving power to coil means (VC), and wherein, said reduction of power-input is effected by an amplifier disable portion (4), of the arrangement operating responsive to means (3).

4. The disk drive servo system of claim 1, 2 or 3 wherein means (5) for virtually shorting-out the current across coil means (VC) is included in the system comprising bi-directional low-impedance means arranged to be selectively coupled across the coil means (VC).

5. The disk drive servo system of claim 4 wherein said bi-directional low-impedance means comprises a "TRIAC".

6. The disk drive servo system of claim 4 or 5 wherein delay means (6) is included in the system coupled at the input to said bi-directional low-impedance means so as to introduce said preset delay.

7. A method of providing servo control to a disk drive servo system adapted to controllably translate servo arm means across disk tracks using actuator means including drive coil means (VC), this system including a safety arrangement adapted to reduce actuator velocity below prescribed maximum velocity ($V_{max}$), this method including the steps of:

detecting actual actuator velocity $V_{act}$;

deriving a velocity signal (VV) from said actual actuator velocity ($V_{act}$);

comparing said velocity signal (VV) with said prescribed maximum velocity ($V_{max}$) and responsive to VV > $V_{max}$ issuing an alarm signal ($V_e$); and

using alarm signal ($V_e$) to virtually short-out current across the coil means (VC) after a prescribed delay.

8. The method of claim 7 including the step of: reducing power-input to coil means (VC) responsive to issuance of alarm signal ($V_e$), and for a prescribed warning period before later shorting-out said current.

## Patentansprüche

1. Servosystem für ein Plattenlaufwerk zum geregelten Verschieben eines Servoarms über Plattenspuren, das Stellantriebsmittel verwendet, die Antriebsspulenmittel (VC) enthalten, und das Servosystem eine Sicherheitsanordnung enthält, die die Geschwindigkeit des Stellantriebes auf eine Geschwindigkeit unterhalb einer vorgeschriebenen Höchstgeschwindigkeit ($V_{max}$) reduziert, und die enthält: Mittel (l) zum Messen der aktuellen Geschwindigkeit ($V_{act}$) des Stellantriebes zu jedem Zeitpunkt während des Betriebes und ein Geschwindigkeitssignal (VV) erzeugt; Mittel (2) zum Vergleichen des Geschwindigkeitssignales (VV) mit der vorgeschriebenen Höchstgeschwindigkeit ($V_{max}$) und daraufhin ein Alarmausgangssignal ($V_e$) erzeugt, falls VV > $V_{max}$, und Mittel (3), die am Ausgang der Vergleichermittel (2) vorgesehen sind, und die abhängig vom Empfang des Alarmausgangssignales ($V_e$) nach einer vorgeschriebenen Verzögerung ein virtuelles Kurzschließen des Stromes an den Spulenmitteln (VC) bewirkt.

2. Servosystem für ein Plattenlaufwerk nach Anspruch 1, wobei die Anordnung ferner in Abhängigkeit vom Erscheinen des Alarmausgangssignales ($V_e$) die Eingangsleistung der Spulenmittel (VC) reduziert, um die Stellantriebsmittel abzubremsen.

3. Servosystem für ein Plattenlaufwerk nach Anspruch 2 mit Leistungsverstärkermitteln (7) zum Liefern einer geregelten Antriebsleistung an die Spulenmittel (VC), und bei dem die Verringerung der Eingangsleistung durch ein Verstärkersperrteil (4) der Anordnung, die abhängig von den Mitteln (3) arbeitet, herbeigeführt wird.

4. Servosystem für ein Plattenlaufwerk nach Anspruch 1, 2 oder 3 mit Mitteln (5) zum virtuellen Kurzschließen des Stromes durch die Spulenmittel (VC) und mit bidirektionalen Mitteln niedriger Impedanz zum wahlweisen Ankoppeln an die Spulenmittel (VC).

5. Servosystem für ein Plattenlaufwerk nach Anspruch 4, bei dem die bi-direktionalen Mittel niedriger Impedanz einen "TRIAC" enthalten.

6. Servosystem für ein Plattenlaufwerk nach Anspruch 4 oder 5 mit Verzögerungsmitteln (6), die an den Eingang des bi-direktionalen Mittels niedriger Impedanz angeschlossen sind, um die voreingestellte Verzögerung zu erzeugen.

7. Verfahren zur Servosteuerung eines Servosystems für ein Plattenlaufwerk zum geregelten Verschieben eines Servoarms über Plattenspuren, das Stellantriebsmittel verwendet, die Antriebsspulenmittel (VC) enthalten, und dieses System eine Sicherheitsanordnung enthält, die die Geschwindigkeit des Stellantriebes auf eine Geschwindigkeit unterhalb einer vorgeschriebenen Höchstgeschwindigkeit ($V_{max}$) reduziert, wobei dieses Verfahren die Schritte enthält:

Messung der aktuellen Geschwindigkeit ($V_{act}$) des Stellantriebes;

Ableiten eines Geschwindigkeitssignales (VV) von der aktuellen Geschwindigkeit des Stellantriebes ($V_{act}$);

Vergleichen des Geschwindigkeitssignales (VV) mit der vorgeschriebenen Höchstgeschwindigkeit ($V_{max}$) und

Erzeugen eines Alarmsignales ($V_e$) abhängig von VV > $V_{max}$;

und Verwenden des Alarmsignales ($V_e$) zum virtuellen Kurzschließen des Stromes durch die Spulenmittel (VC) nach einer vorgeschriebenen Verzögerung.

8. Verfahren nach Anspruch 7, mit den Schritten: Verringern der Eingangsleistung der Spulenmittel (VC) abhängig vom Erzeugen des Alarmsignales ($V_e$), und während einer vorgeschriebenen Warnzeit vor dem späteren Kurzschließen des Stromes.

## Revendications

1. Dispositif asservi d'entraînement de disque pour la commande de la translation d'un bras asservi à travers les pistes d'un disque à l'aide d'un actionneur comprenant une bobine d'entraînement (VC), ce dispositif comprenant un ensemble de sécurité prévu pour réduire la vitesse de l'actionneur en dessous d'une vitesse maximale prescrite (Vmax), cet ensemble comprenant un moyen (1) pour la détection de la vitesse réelle de l'actionneur (Vact) à tout moment donné pendant le fonctionnement et fournissant un signal de vitesse (VV), un moyen (2) comparant ledit signal de vitesse (VV) avec ladite vitesse maximale prescrite (Vmax) et fournissant en réponse un signal de sortie d'alarme (Ve) lorsque VV>Vmax et un moyen (3) prévu à la sortie du moyen de comparaison (2) et adapté pour recevoir un signal de sortie d'alarme (Ve) et provoquer un courant de court-circuit virtuelle vers la bobine (VC) après un délai prescrit.

2. Dispositif asservi d'entraînement de disque selon la revendication 1, dans lequel l'ensemble réduit aussi la puissance d'entrée dans la bobine (VC) sensible à l'apparition d'un signal de sortie d'alarme (Ve) pour ralentir l'actionneur.

3. Dispositif asservi d'entraînement de disque selon la revendication 2, dans lequel un amplificateur de puissance (7) est compris dans le dispositif pour fournir une puissance d'entraînement commandé à la bobine (VC) et dans lequel ladite réduction de la puissance d'entrée est effectuée par une -partie de désactivation de l'amplificateur (4) de l'ensemble fonctionnant en réponse au moyen (3).

4. Dispositif asservi d'entraînement de disque selon la revendication 1, 2 ou 3, dans lequel un moyen (5) pour court-circuiter virtuellement le courant dans la bobine (VC) est inclus dans le dispositif comprenant un moyen bidirectionnel à basse impédance précu pour être couplé sélectivement à la bobine (VC).

5. Dispositif asservi d'entraînement de disque selon la revendication 4, dans lequel ledit moyen bidirectionnel à basse impédance comprend un "TRIAC".

6. Dispositif asservi d'entraînement de disque selon la revendication 4 ou 5, dans lequel un retardateur (6) est inclus dans le dispositif, couplé à l'entrée dudit moyen bidirectionnel à basse impédance de façon à introduire ledit retard préétabli.

7. Procédé de servocommande pour un dispositif asservi d'entraînement de disque prévu pour déplacer en translation de façon commandé un bras asservi sur les pistes d'un disque à l'aide d'un actionneur comprenant une bobine d'entraînement (VC), ce dispositif comprenant un ensemble de sécurité prévu pour réduire la vitesse de l'actionneur en dessous d'une vitesse maximale prescrite (Vmax), procédé comprenant les étapes suivantes :

- la détection de la vitesse réelle de l'actionneur (Vact);

- la dérivation d'un signal de vitesse (VV) de ladite vitesse réelle de l'actionneur (Vact) :

- la comparaison dudit signal de vitesse (VV) avec ladite vitesse maximale prescrite (Vmax) et fournissant un signal d'alarme (Ve) si VV>Vmax et

- l'utilisation du signal d'alarme (Ve) pour court-circuiter virtuellement le courant dans la bobine (VC) après un retard prescrit.

8. Procédé selon la revendication 7, comprenant une étape de réduction de la puissance d'entrée de la bobine (VC) sensible à l'apparition d'un signal d'alarme (Ve) pendant une période d'alarme prescrite avant de court-circuiter ensuite ledit courant.

## Fig.1

VOICE COIL VC

CS

μ PROC RESET

V

i

Rs

VELOCITY DETECTOR 1

vv

VELOCITY THRESHOLD COMPARATOR 2

Ve

LATCH 3

aa

μ PROC ACTIVATION

POWER AMPLIFIER DISABLE 4

POWER AMP. 7

FAULT REPORT 8

TO μPROC

aa

DELAY 6

i-CUT-OFF CROWBAR ACTIVATION (STOPS CARRIAGE) 5

## Fig.3

| FIG.3A | FIG.3B | FIG.3C | FIG.3D |
|--------|--------|--------|--------|

EP 0 305 498 B1

*Fig.2*

+13.2V

+13.2V

+13.2V

+13.2V

+13.2V

−13.2V

+13.2V

+13.2V

CS

2

4

−DISABLE POWER AMP A

+13.2V

+PWR AMP FAULT A

+PWR AMP FAULT A

VCM RTNA

VCM DRIVE A

FROM μP

+13.2V

36V

+13.2V

3

5&6

7

EP 0 305 498 B1

# Fig.3A

EP 0 305 498 B1

Fig.3B

9

EP 0 305 498 B1

Fig. 3C

CH.I BAFCO

C3    C2                    OFFSET
                           CORRECTOR

MPU-DATA → POSITION
GAIN-SET

K/S    SW    RESONANCE    +  M  −  SW    AMP &
             FILTERS                     COMP.

CLOCK
GENERATOR

30μ-IN
WINDOW        AGC OK

50μ-IN        WRITE
WINDOW        INHIBIT

              EARLY
              ARRIVAL → FINE-POS

OVERSHOOT
DETECTOR

OVERSHOOT

                          SERVO
                          STATE
                          LATCH

MPU-DATA →

C1 −2 LIN MD.
C2 LIN MD.
C3 −INTG. ENA
C4 +DIFF>511
C5
C6
C7
C8

ENA. SERVO

10

Fig.3D

COMPRESS

ENABLE-BIAS

FROM µP

CARRIAGE SAFETY → TO µP

SW + M — PRE-DRIVER POWER AMP VCM HDA

CURRENT REPORT

SERVO TIMING STATE PALS

STATE SIGNALS IN

TIMING SIGNALS OUT

RESET-PATH

∫DT

HIGH PASS FILTER

D/DT

LOW PASS FILTER

M + +

SWITCH

TI

+P>Q 51
+P>-Q 52
-P>0 53
-Q>0 54
END ACC 55
30 MIN 56
50 MIN 57
TACH G. 58

SERVO STATUS → MPU-DATA

RD. SERVO ST.

TACH A1
POS. PEAK A2
CUR. REPT A3
CH.I BAFCO A4
VEL.COMD A5
POS. Q A6
POS. P A7
HDA LEV A8

SERVO ANALOG MUX → ANALOG CH.

CHAN. SELECT